# EUROPÄISCHE PATENTSCHRIFT

(11) **EP 0 586 362 B1**
(45) Veröffentlichungstag und Bekanntmachung des Hinweises auf die Patenterteilung: **23.10.1996**
(21) Anmeldenummer: 93890151.9
(22) Anmeldetag: 04.08.1993
(51) Int. Cl.: G01N 21/53, G01M 15/00, F02B 77/08

(54) **Verfahren und Einrichtung zur Bestimmung von Betriebsparametern von Brennkraftmaschinen**
Method and device for determination of the operating parameters of internal combustion engines
Méthode et appareil pour déterminer les parametres d'opération des moteurs à combustion interne

(30) Priorität: 04.09.1992 DE 4229619
(43) Veröffentlichungstag der Anmeldung: 09.03.1994
(73) Patentinhaber: AVL Gesellschaft für Verbrennungskraftmaschinen und Messtechnik mbH.Prof.Dr.Dr.h.c. Hans List, A-8020 Graz (AT)
(72) Erfinder: Ponticelli, Martin, Dipl.-Ing., A-8010 Graz (AT); Simbürger, Karl, A-8403 Lebring (AT)
(74) Vertreter: Klein, Adam, Dipl.Ing.

(56) Entgegenhaltungen:
- EP-A- 0 209 704
- DE-U- 9 011 015

## Beschreibung

Die Erfindung betrifft ein Verfahren zur Bestimmung von Betriebsparametern von Brennkraftmaschinen bei freier Beschleunigung, insbesondere zur Trübungsmessung am Abgas einer Diesel-Brennkraftmaschine, wobei die Drehzahl der Brennkraftmaschine überwacht und die Aufnahme von dem zu bestimmenden Parameter zugeordneten Meßwerten bei Überschreiten einer bestimmten unteren Drehzahl, insbesondere der Leerlaufdrehzahl, gestartet und nach Überschreiten einer bestimmten oberen Drehzahl, insbesondere der Abregeldrehzahl, abgebrochen wird. Weiters betrifft die Erfindung auch eine Einrichtung zur Durchführung eine derartigen Verfahrens.

Für viele prozedurale (im Gegensatz zu kontinuierlichen) Meß- und Diagnoseaufgaben an Brennkraftmaschinen ist eine automatische Meßzyklenerkennung durch das entsprechende Meßgerät vorteilhaft bzw. notwendig. Beispielhaft sei angeführt die Trübungsmessung von Dieselmotorabgasen bei freier Beschleunigung, wobei bei Überschreiten einer bestimmten unteren Drehzahl (üblicherweise der Leerlaufdrehzahl) die Messung ausgelöst wird. Freie Beschleunigung bedeutet in diesem Zusammenhang den Hochlauf der Brennkraftmaschine gegen das eigene Trägheitsmoment ohne zusätzliche Last.

Im Falle der Trübungsmessung von Dieselabgasen bei freier Beschleunigung sind neben EG- und ECE-Richtlinien in den einzelnen Staaten, in denen die Überprüfung der zum Antrieb von Kraftfahrzeugen eingesetzten Dieselmotoren nach diesem Verfahren vorgesehen ist, relativ genaue Durchführungsrichtlinien vorgeschrieben. Meistens werden mehrmalige Beschleunigungszyklen zum Zwecke der Plausibilitätskontrolle und der Mittelwertbildung verlangt. Üblicherweise beinhalten diese Richtlinien auch eine minimale Zeitdauer, während welcher der Dieselmotor nach dem Hochbeschleunigen, veranlaßt durch eine Bedienungsperson, auf der oberen Drehzahl (Abregeldrehzahl) gehalten werden muß. In diesem Fall wird meist auch eine Drehzahlmessung vorgeschrieben.

Dieselmotoren bzw. Brennkraftmaschinen zum Antrieb von Kraftfahrzeugen werden in unterschiedlichen Größen gebaut. Aus diesem Grund sind die Hochlaufzeiten von der Leerlaufdrehzahl zur Abregeldrehzahl sehr unterschiedlich (ca. eine halbe bis mehrere Sekunden). Das Halten der Abregeldrehzahl ohne Last stellt eine nicht unbeträchtliche Belastung für Motor und Umwelt dar und sollte deshalb auf den geringstmöglichen Zeitraum begrenzt werden, was mit den bekannten Verfahren bzw. Einrichtungen der genannten Art aber nicht zufriedenstellend möglich ist.

Der Großteil beispielsweise der heutzutage bekannten Trübungsmeßgeräte ermöglicht keine automatisierte Meßzyklenerkennung. In diesem Fall muß eine Messung vom Bedienpersonal ausgelöst werden (meist per Tastendruck). Daraufhin werden während eines festgelegten Zeitraums die Trübungs- und, wenn vorgeschrieben, die Drehzahlwerte aufgezeichnet. In dieser Zeit muß das Bedienpersonal den Motor beschleunigen und während mindestens der vorgeschriebenen Minimaldauer auf der Abregeldrehzahl halten.

Gemäß der EP 0 209 704 B1 wird beispielsweise als Parameter zur Auslösung von Meßwertermittlung und Meßwertberechnung im genannten Zusammenhang ein definierter Drehzahlanstieg des Motors vorgesehen. Es wird dabei nach dem Auslösen der Meßwerterfassung während einer konstanten Zeitdauer gemessen und hinterher die Meßwertberechnung ausgelöst. Auch hier muß das Bedienpersonal während der vorgeschriebenen Mindestdauer die Abregeldrehzahl selbst und ohne Benutzerführung halten.

Der Erfindung zugrunde liegt der Gedanke, neben einem Kriterium für die Auslösung auch ein Kriterium für die Beendigung der Meßwerterfassung zu finden, d.h. neben dem Überschreiten der Leerlaufdrehzahl auch das Überschreiten der Abregeldrehzahl festzustellen und den Ablauf der Mindestdauer für die Abregeldrehzahl an das Erreichen dieser Drehzahl zu knüpfen und dann beispielsweise direkt dem Bedienpersonal anzuzeigen, um ein unnötig langes und belastendes Verbleiben auf der Abregeldrehzahl zu vermeiden. Erreicht wird dies bei dem erfindungsgemäßen Verfahren dadurch, daß der Zeitpunkt des Erreichens der oberen Drehzahl bzw. Abregeldrehzahl als Bezugszeitpunkt für die ab dann noch für eine bestimmte Zeit fortzusetzende Beibehaltung der oberen Drehzahl verwendet wird.

In der erfindungsgemäßen Einrichtung zur Durchführung des beschriebenen Verfahrens ist neben einer Meßeinrichtung für den zu bestimmenden Betriebsparameter und einer Drehzahlüberwachungseinrichtung auch eine Zeitschaltung vorgesehen welche den Zeitpunkt des Erreichens der oberen Drehzahl als Startzeitpunkt für die ab dann noch für eine bestimmte Zeit fortzusetzende Beibehaltung der oberen Drehzahl verwendet und nach Ablauf dieser eine angeschlossene Auslöseeinrichtung aktiviert, die das Ende der Beschleunigungsphase einleitet.

Weitere Merkmale und Vorteile der erfindungsgemäßen Ausgestaltungen des beschriebenen Verfahrens ergeben sich aus den Ansprüchen 2 bis 4.

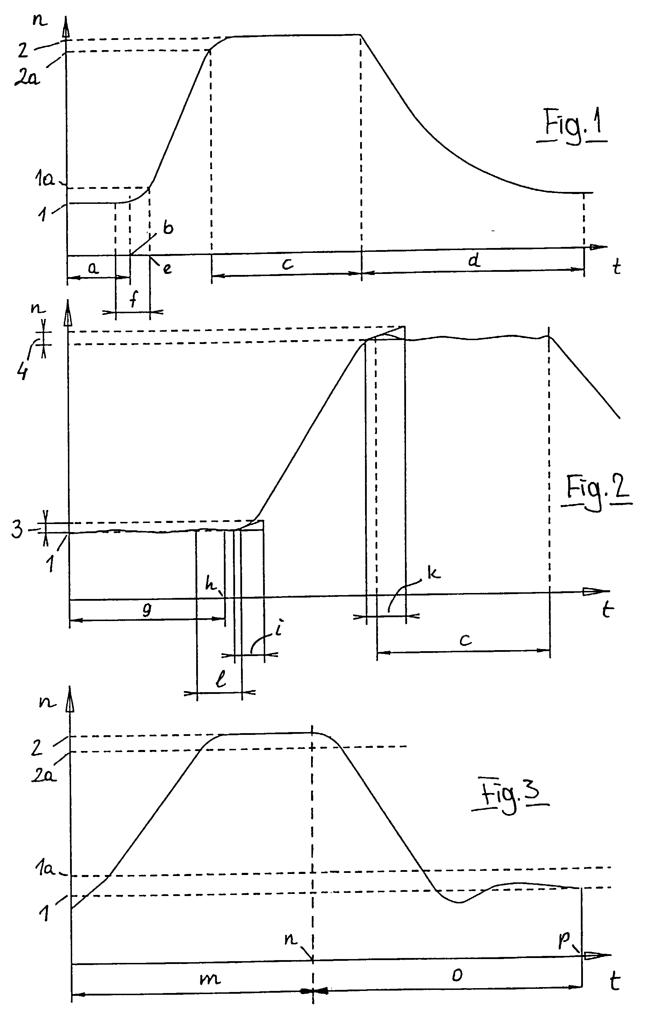

Die Erfindung und ihre Vorteile werden im folgenden noch unter Bezugnahme auf die in Fig. 1 bis 3 dargestellten Drehzahl/Zeitdiagramm näher erläutert.

Wenn, wie etwa für die deutsche Abgassonderuntersuchung, die Sollwerte für Leerlauf- und Abregeldrehzahl vorgeschrieben und für den Protokollausdruck auch dem Meßgerät bekanntgemacht werden müssen, ist einfach nach Fig. 1 das Verlassen bzw. Erreichen der jeweiligen Drehzahltoleranzbänder zu registrieren. Dieselbe Vorgangsweise kann eingehalten werden, wenn die Daten bekannt sind und bspw. über Tastatur dem Meßgerät eingegeben werden, auch wenn dies gesetzlich nicht gefordert wird.

Nachdem das Bedienpersonal über die Benutzerführung an einer hier nicht dargestellten Einrichtung zur Durchführung des erfindungsgemäßen Verfahrens aufgefordert wurde, die Brennkraftmaschine auf Leerlaufdrehzahl 1 zu bringen, wird eine bestimmte Zeitspanne a, typisch einige Sekunden gewartet, um das Erreichen der Leerlaufdrehzahl sicherzustellen. Daraufhin wird zum Zeitpunkt b über Benutzerführung die Aufforderung an das Bedienpersonal ausgegeben, den Motor voll zu beschleunigen. Überschreitet danach die Drehzahl n die obere Toleranzgrenze 1a der Leerlaufdrehzahl 1, so wird die eigentliche Meßwerterfassung ausgelöst. Bei Überschreitung der unteren Toleranzgrenze 2a der Abregeldrehzahl 2 wird das Ende der Beschleunigungsphase erkannt und nach Verstreichen der gesetzlich oder aus praktischen Überlegungen vorgegebenen Mindestdauer c das Bedienpersonal aufgefordert, den Motor zu drosseln. Nach Verstreichen einer vorgegebenen Zeitdauer d wird das Meßgerät für einen neuen Beschleunigungszyklus freigegeben. Eine Verbesserung der Meßzyklenerfassung läßt sich erreichen, wenn die eigentlichen Meßwerte bereits vor dem Startzeitpunkt der Meßzyklenerkennung e in einem Ringspeicher erfaßt und eine bestimmte Zeitdauer f in die Vergangenheit rückreichend ausgewertet werden.

Handelt es sich um eine Brennkraftmaschine mit unbekannten Leerlauf- und Abregeldrehzahlen, sind zwei Möglichkeiten für die Verfahrensdurchführung gegeben.

Erstens wird nach Fig. 2 die momentane Änderung der Motordrehzahl als Auswertekriterium herangezogen. Nachdem das Bedienpersonal über die Benutzerführung aufgefordert wurde, die Brennkraftmaschine auf Leerlaufdrehzahl 1 zu bringen, wird eine bestimmte Zeitspanne g, typisch einige Sekunden gewartet, um das Erreichen der Leerlaufdrehzahl sicherzustellen. Daraufhin wird zum Zeitpunkt h über Benutzerführung die Aufforderung an das Bedienpersonal ausgegeben, den Motor voll zu beschleunigen, und gleichzeitig die Auswertung der Drehzahl in Bezug auf zeitliche Änderung begonnen. Überschreitet dieser Wert Delta n(3)/Delta t(i) eine festgelegte Schwelle, so wird die eigentliche Meßwerterfassung ausgelöst. Bei Unterschreitung einer festgelegten Schwelle der Änderungsgeschwindigkeit (4/k) wird das Erreichen der Abregeldrehzahl erkannt und nach Verstreichen der gesetzlich oder aus praktischen Überlegungen vorgegebenen Mindestdauer c das Bedienpersonal aufgefordert, den Motor zu drosseln.

Eine Verbesserung der Meßzyklenerfassung läßt sich wiederum erreichen, wenn die eigentlichen Meßwerte bereits vor dem Startzeitpunkt der Meßzyklenerkennung in einem Ringspeicher erfaßt und eine bestimmte Zeitdauer (1) in die Vergangenheit rückreichend ausgewertet werden.

Werden die Schwellwerte der Änderungsgeschwindigkeit für die Erkennung von Beginn und Ende der freien Beschleunigung geeignet gewählt, so sind in der Charakteristik unterschiedliche Verbrennungskraftmaschinen auswertbar. Gleichzeitig spielen geringe Schwankungen der Leerlauf- und Abregeldrehzahl während der Phasen g und c keine Rolle.

Das zweite Verfahren ermittelt in einem ersten Schritt nach Fig. 3 die unbekannten Größen Leerlauf- (1) und Abregeldrehzahl (2). Dazu wird das Bedienpersonal aufgefordert, die Abregeldrehzahl anzufahren und nach Verstreichen einer festgelegten Zeit m - um ein zuverlässiges Einschwingen sicherzustellen - zum Zeitpunkt n die Abregeldrehzahl gemessen. Daraufhin erfolgt die Aufforderung, wieder die Leerlaufdrehzahl anzufahren, welche analog nach Verstreichen der Zeitspanne o zum Zeitpunkt p ermittelt wird. In einem letzten Schritt werden nun noch von diesen gemessenen Werten feste bzw. prozentuelle Werte für die Abregeldrehzahl abgezogen bzw. für die Leerlaufdrehzahl dazugezählt und somit die Drehzahlschwellen (1a) und (2a) für die eigentlichen Beschleunigungsmessungen festgelegt.

In der Praxis wird vor der Durchführung der eigentlichen Trübungsmessung mit den mehrmaligen Beschleunigungszyklen üblicherweise überprüft, ob die Leerlauf- und Abregeldrehzahlwerte richtig eingestellt sind (Konditionierschritt), sodaß in diesem Fall obige Vorgangsweise keinen unnötigen Aufwand verursacht.

Die eigentliche Trübungsmessung mit den mehrmaligen Beschleunigungszyklen erfolgt dann ebenso wie bei bekannten Leerlauf- und Abregeldrehzahlen nach Fig. 1.

Über den bekannten Stand der Technik hinaus ermöglicht die beschriebene Erfindung eine automatische Erkennung sowohl des Beginns als auch des Endes einer freien Beschleunigung einer Verbrennungskraftmaschine. Daraus lassen sich motorschonende Prozeduren mit Benutzerführung z.B. für die Durchführung von Trübungsmeßzyklen ableiten. Die automatische Erkennung der Leerlauf- und Abregeldrehzahl ist dabei unabhängig davon möglich, ob die entsprechenden Drehzahlen bereits vor der Prüfprozedur bekannt waren oder nicht.

## Patentansprüche

1. Verfahren zur Bestimmung von Betriebsparametern von Brennkraftmaschinen bei freier Beschleunigung, insbesondere zur Trübungsmessung am Abgas einer Diesel-Brennkraftmaschine, wobei die Drehzahl der Brennkraftmaschine überwacht und die Aufnahme von dem zu bestimmenden Parameter zugeordneten Meßwerten bei Überschreiten einer bestimmten unteren Drehzahl, insbesondere der Leerlaufdrehzahl, gestartet und nach Überschreiten einer bestimmten oberen Drehzahl, insbesondere der Abregeldrehzahl, abgebrochen wird, dadurch gekennzeichnet, daß der Zeitpunkt des Erreichens der oberen Drehzahl bzw. Abregeldrehzahl als Bezugszeitpunkt für die ab dann noch für eine bestimmte Zeit fortzusetzende Beibehaltung der oberen Drehzahl verwendet wird.

2. Verfahren nach Anspruch 1, dadurch gekennzeichnet, daß bei zusammen mit entsprechenden Toleranzbändern bekannten Werten für Leerlauf- und Abregeldrehzahl der jeweiligen Brennkraftmaschine die Überschreitung der oberen Toleranzgrenze der Leerlaufdrehzahl als Zeitpunkt der Überschreitung der Leerlaufdrehzahl und die Überschreitung der unteren Toleranzgrenze der Abregeldrehzahl als Zeitpunkt des Erreichens der Abregeldrehzahl ausgewertet wird.

3. Verfahren nach Anspruch 1, dadurch gekennzeichnet, daß bei unbekannten Werten für Leerlauf- und Abregeldrehzahl der jeweiligen Brennkraftmaschine diese Werte in einer der eigentliche Meßphase vorangehenden Hochlaufphase ermittelt und daraus zusammen mit entsprechenden Toleranzbändern festgelegt werden.

4. Verfahren nach Anspruch 1, dadurch gekennzeichnet, daß die Werte für Leerlauf- und Abregeldrehzahl durch Überprüfung der Drehzahländerung über der Zeit ermittelt werden.

5. Einrichtung zur Durchführung des Verfahrens nach einem oder mehreren der Ansprüche 1 bis 4, in der neben einer Meßeinrichtung für den zu bestimmenden Betriebsparameter und einer Drehzahlüberwachungseinrichtung auch eine Zeitschaltung vorgesehen ist, welche den Zeitpunkt des Erreichens der oberen Drehzahl als Startzeitpunkt für die ab dann noch für eine bestimmte Zeit fortzusetzende Beibehaltung der oberen Drehzahl verwendet und nach Ablauf dieser Zeit eine angeschlossene Auslöseeinrichtung aktiviert, die das Ende der Beschleunigungsphase einleitet.

## Claims

1. Method of determining operating parameters of internal combustion engines under free acceleration, in particular for opacity measurement of exhaust gas of a diesel engine, the speed of the engine being monitored and the picking-up of measured values associated with the parameter to be determined being started when a predetermined lower speed limit, in particular the idling speed is exceeded, and being terminated when a predetermined upper speed limit, in particular the governed speed, is exceeded, characterised in that the instant of attainment of the upper speed limit or governed speed is employed as a reference time instant for the subsequent maintenance of the upper speed continued thereafter for a predetermined further period.

2. Method according to claim 1, characterised in that with known values, together with correspondence tolerance bands, for idling speed and governed speed of the engine in question the exceeding of the upper tolerance limit for the idling speed is evaluated as the instant of exceeding the idling speed and the exceeding of the lower tolerance limit of the governed speed is evaluated as the instant of attainment of the governed speed.

3. Method according to claim 1, characterised in that, with unknown values for the idling and governed speed of the engine in question, these values are determined in a run-up phase preceding the actual measurement phase and are determined for this together with correspondence tolerance bands.

4. Method according to claim 1, characterised in that the values of idling and governed speed are determined by observing the change in speed over the time period.

5. Device for carrying out the method according to one or more of claims 1 to 4 in which, in addition to a measuring device for the operating parameter to be determined and a speed monitoring device there is also provided a timing circuit which employs the instant of attainment of the upper speed as the starting time for the maintenance of the upper speed continued from then on for a predetermined period and after completion of this period activates an associated initiating device which causes the termination of the acceleration phase.

## Revendications

1. Procédé pour déterminer des paramètres de fonctionnement de moteurs thermiques en accélération libre (sans charge), en particulier pour l'analyse de turbidité des gaz d'échappement d'un moteur Diesel, dans lequel on surveille la vitesse de rotation du moteur à combustion et l'on commence à capter les valeurs de mesure associées aux paramètres à déterminer après dépassement d'une vitesse de rotation inférieure déterminée, en particulier celle de la marche au ralenti, et on cesse de capter, après dépassement d'une vitesse de rotation supérieure déterminée, en particulier, celle de la coupure d'injection en survitesse, caractérisé en ce qu'on utilise l'instant où l'on atteint la vitesse de rotation supérieure ou bien la vitesse de rotation de coupure d'injection en survitesse comme instant de référence à partir duquel on maintient encore pendant une durée déterminée la vitesse de rotation supérieure.

2. Procédé selon la revendication 1, caractérisé en ce que, en liaison avec les valeurs connues des bandes de tolérance correspondantes, pour la vitesse de rotation de marche au ralenti et pour la vitesse de rotation de coupure d'injection en survitesse du moteur à combustion en cause, on prend comme instant du dépassement de la vitesse de rotation au ralenti l'instant où l'on dépasse la limite supérieure de tolérance de la vitesse de rotation au ralenti, et on prend comme instant où l'on atteint la vitesse de rotation de coupure d'injection en survitesse, l'instant où l'on dépasse la limite de tolérance inférieure de la vitesse de rotation de coupure d'injection en survitesse.

3. Procédé selon la revendication 1, caractérisé en ce que, lorsque les vitesses de rotation de marche au ralenti et de coupure d'injection en survitesse du moteur à combustion en cause sont inconnues, on détermine ces valeurs au cours d'une phase de mesure à vitesse de rotation maximale qui précède la phase de mesure effective, et on fixe ces valeurs en même temps que les bandes de tolérance correspondantes.

4. Procédé selon la revendication 1, caractérisé en ce qu'on détermine les valeurs des vitesses de rotation en marche au ralenti et en marche à la coupure d'injection en survitesse, en examinant la variation de la vitesse de rotation au cours du temps.

5. Dispositif pour la mise en oeuvre du procédé selon l'une ou plusieurs des revendications 1 à 4, dans lequel est prévu, en plus d'un organe de mesure pour les paramètres de fonctionnement à déterminer, et en plus d'un organe de surveillance de la vitesse de rotation, également un interrupteur temporisé qui utilise l'instant où l'on atteint la vitesse de rotation supérieure comme instant de départ à partir duquel on maintient encore pendant une durée déterminée la vitesse de rotation supérieure et qui, après l'expiration de cette durée, excite ou active un organe de déclenchement qui lui est raccordé et qui provoque la fin de la phase d'accélération.
